# EUROPEAN PATENT APPLICATION

(11) **EP 0 667 605 A1**
(43) Date of publication of application: **16.08.1995**
(21) Application number: 94301046.2
(22) Date of filing: 14.02.1994
(51) Int. Cl.: G11B 5/31, G11B 5/60

(54) **Slider for miniature transducer**

(71) Applicant: MAGNEX CORPORATION, San Jose, California 95119 (US)
(72) Inventor: Fong-Jei, Lin, San Jose, California 95139 (US); Shengbo, Zhu, San Jose, California 95120 (US)
(74) Representative: Beresford, Keith Denis Lewis

(57) **Abstract**

A magnetic slider (35) is fabricated from essentially pure A1₂0₃ which has superior thermal and electrical properties to the commonly used ALTIC material. The use of AI₂O₃ permits the elimination of one coating step durig batch fabrication of thin film transducer sliders and combination thin film transducer/transformer sliders. The improved thermal characteristics substantially reduce the build up of thermal stresses during batch fabrication on the individual wafer, with an attendant reduction in bending and twisting of the individual row bars of devices in process.

## Description

### BACKGROUND OF THE INVENTION

This invention relates to magnetic head sliders, and in particular to a composition of material used for the slider.

Magnetic head sliders have been used extensively in the data processing industry to write data to and read data from rotating magnetic disks. Typically, the magnetic head slider comprises a unitary body having a leading end, a trailing end and a pair of rails extending therebetween, and at least one thin film transducer carried by the trailing end. Although originally designed as a discrete device, today the transducer is usually a thin film device formed on the slider. The transducer includes a top pole, a bottom pole and an electrically conductive coil magnetically linked to the two poles. The thin film transducer is typically formed on the trailing end surface of the slider using photolithographic techniques involving the formation of patterns using photomasking and etching to form the appropriate pole and coil patterns. The completed thin film transducer has a pole tip region which terminates at the air bearing surface of the slider.

A variation on the magnetic head slider described above, and one which is widely employed in present day technology, comprises a design in which a pair of thin film transducers are formed on the trailing edge surface of the slider, with one transformer positioned at the trailing end of one of the rails and the other transducer formed at the trailing end of the other one of the rails. Electrically conductive leads are also formed emanating from each transducer to a larger contact pad area to facilitate electrical connection with the follow on disk drive electronics. Still another variation of this two transducer assembly involves the substitution of a thin film transformer for one of the thin film transducers. An example of this arrangement is shown in our issued U.S. Patent No. 5,072,324 for Thin Film Transducer/Transformer Assembly, issued December 10, 1991, the disclosure of which is hereby incorporated by reference.

Magnetic head sliders are typically fabricated commercially using batch processing techniques in order to minimize the fabrication cost. The basic steps involve selection of a starting wafer composed of a suitable material, preparation of the individual thin film transducer devices on the eventual trailing end of each slider, overcoating the finished transducer devices with a suitable insulative material and lapping the coated surface to expose the electrical contact pad. Thereafter, the wafer is separated into bars by slicing. Each bar is bonded to a transfer tool with the unfinished pole tips of each transducer facing up and away from the tool bonding surface. The rail slots are then cut along the developing air bearing surface, the centrally located air bleed slots are ground, and the bar is then cut into individual sliders using a diamond wheel. After cutting, the pole tips are commonly lapped to provide a zero throat clearance, after which the individual, now-completed sliders are debonded from the transfer tool using a suitable solvent. The individual sliders are now ready to be assembled on a suitable flexure mounting arm, such as that shown in U.S. Patent No. 4,167,765, issued September 11, 1979.

The common material of choice in the industry for use as the slider body member is a material known as ALTIC, which is a designator for a sintered compound of A1₂0₃ and TiC. The preparation and use of this material is described in U.S. Patent No. 4,251,841 for Magnetic Head Slider Assembly, issued February 17, 1981, the disclosure of which is hereby incorporated by reference. Since this material exhibits some electrical conductivity, the starting wafer is usually coated with an electrically insulative material prior to formation of the individual thin film transducers. This coating process is usually done by sputtering the wafer with a suitable electrical insulation material, such as A1₂0₃, for five to ten hours at a temperature from 200-400 ° C. As noted above, after the individual thin film transducers have been formed, the surface of the wafer is again overcoated to provide a protective layer. This is usually performed using the same material and temperature range as the original coating step, but for a substantially longer period of time, usually in the range from 20 to 40 hours. During these two coating processes using the sputtering technique, the wafer develops internal thermal stresses due to the different coefficients of thermal expansivity and possible anisotropic characteristics of ALTIC. These stresses are normally exhibited after the wafer has been exposed to high heat for a prolonged period of time and is sliced into individual bars. More specifically, after separation into individual bars and prior to bonding to the transfer tool the individual bars exhibit either positive or negative curvature or compound curvature including twisting. Such curvatures adversely affect the pole tip lapping process since some of the pole tips are insufficiently lapped while others are lapped past the zero throat region. As a consequence, the manufacturing yield is adversely affected.

### SUMMARY OF THE INVENTION

The invention comprises a magnetic slider which is devoid of the disadvantages noted for sliders made of the ALTIC material, and which requires one less manufacturing process step and is thus less expensive to fabricate.

Broadly stated, the invention comprises a magnetic slider for use in a disk drive apparatus, the slider comprising a unitary body member consisting essentially of A1₂0₃, the body member having an air bearing surface, a leading end and a trailing end; and at least one thin film transducer formed at the trailing end and having a pole tip region terminating at the air bearing surface. The body member preferably has a pair of rails extending between the leading end and the trailing end. In one embodiment, a pair of thin film transducers are formed at the trailing end of the body member, with each transducer formed at the end of a different one of the rails. In another embodiment, a thin film transducer is formed at the trailing end of one of the rails and a thin film transformer is formed at the trailing end of the other one of the rails.

The slider is fabricated using batch fabrication techniques by starting with a wafer fabricated of A1₂0₃. This material is electrically nonconductive. Consequently, the initial coating by sputtering step is not required and can be eliminated in the process according to the invention. After formation of the individual thin film transducer elements or the combination of the thin film transducer and thin film transformer elements, the wafer surface is overcoated by sputtering and lapped to expose the electrical contact pads, after which the wafer is separated into bars. The individual bars are processed by bonding to a transfer tool, cutting the rail slots, grinding the bleed slots, cutting the bar into individual slider portions using a diamond wheel, lapping the individual pole tips of the transducers and transformers (when present), and de- bonding the individual completed sliders from the transfer tool using a suitable solvent.

By using the A1₂0₃ material, several advantages are obtained. Firstly, this material is electrically nonconductive: as a consequence, the initial coating step is eliminated which saves one process step. In addition, A1₂0₃ has essentially isotropic thermal expansion properties, which, in combination with the relatively poor heat conductivity of this material, reduces substantially any thermal stresses during the overcoat step. As a result the bending and twisting normally experienced with ALTIC sliders is substantially reduced with a resulting manufacturing yield increase.

For a fuller understanding of the nature and advantages of the invention, reference should be had to the ensuing detailed description taken in conjunction with the accompanying drawings.

### BRIEF DESCRIPTION OF THE DRAWINGS

Fig. 1 is a schematic plan view of a wafer with finished magnetic devices prior to slicing into bars;
Fig. 2 is a side view illustrating a portion of a single bar bonded to a transfer tool;
Fig.3 illustrates schematically a first embodiment of the invention; and
Fig. 4 is a view similar to Fig. 3 showing a second embodiment of the invention.

### DESCRIPTION OF THE PREFERRED EMBODIMENT

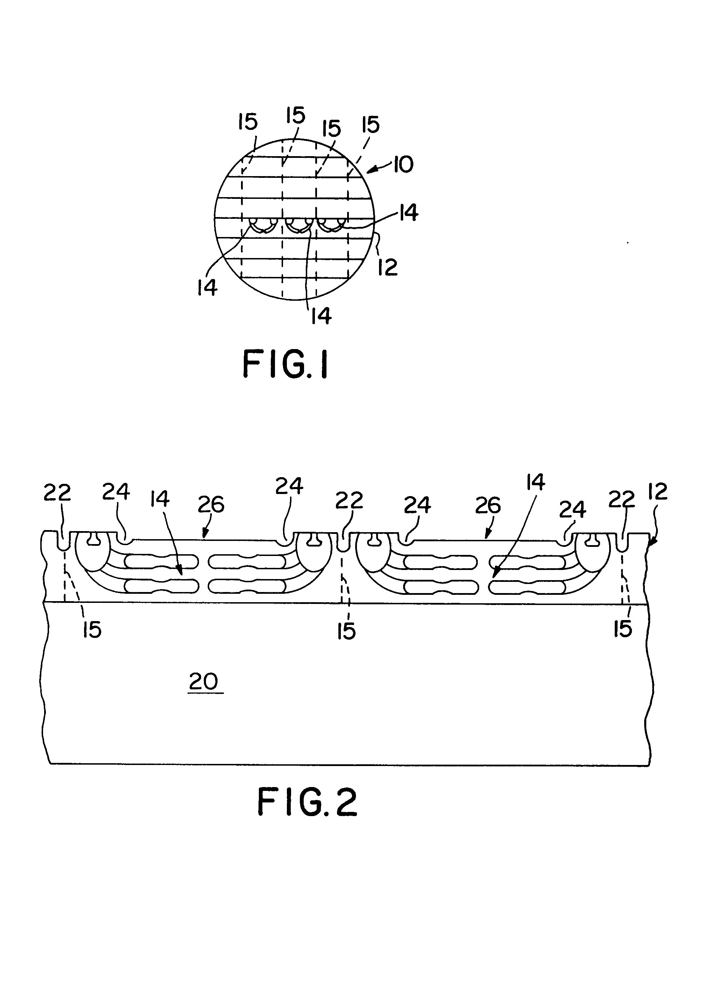

Turning now to the drawings, Figure 1 is a top plan schematic view of a wafer having completed magnetic devices, such as thin film transducers and thin film transformers after lapping to expose the contact pads, but prior to slicing into individual bars. It is understood that Fig. 1 is illustrative only, and that an actual wafer has many more magnetic devices with substantially smaller dimensions that those shown. It will be further understood that the process of formation of these individual active magnetic elements is accomplished using known fabrication techniques such as those described in the above-referenced patents. However, prior to formation of the active magnetic devices on what will become the trailing edge surface of each slider, the initial coating step is no longer required when the wafer 10 is fabricated from a material consisting essentially of A1₂0₃. The reason for this elimination of a formerly required process step lies in the fact that A1₂0₃ is electrically non-conductive and therefore need not be insulated prior to the beginning of the active magnetic element formation process. In addition, A1₂0₃ is a relatively poor conductor of heat compared to ALTIC and has more uniform thermal expansivity, which leads to improved yield when the wafer with semi-finished magnetic devices is overcoated by sputtering at high heat.

The A1₂0₃ used in the preferred embodiment has a purity of at least 99.9% and the grain size is less than 3 microns. The substrate is formed by such known processes as the hot isostatic press process (the so called HIP process), hot press or sintering. After initial formation, the substrate is machined to be round or square with one surface polished for the subsequent transducer fabrication. The thickness of the the substrate varies depending on the slider size required and isually from 80 mils to 160 mils.

As seen in Fig. 1, the wafer is mapped into a plurality of rows, such as row 12, each row having a repeating pattern of active magnetic elements such as elements 14. The completed individual magnetic sliders will comprise the rectangular portions bounded by the row 12 boundaries in the horizontal direction and the dotted lines 15 in the vertical direction.

Fig. 2 illustrates in enlarged fashion a portion of row 12 after separation from the other rows of wafer 10 and after bonding to the surface of a transfer tool 20. Transfer tool 20 is typically fabricated from stainless steel and is used as a stable base for the final finishing steps required to form the individual sliders. As seen in Fig. 2, row 12 has been bonded to the upper face of transfer tool 20. In addition, the rail slots 22, 24 and the bleed slots 26 have been formed in what will become the air bearing surface of each individual slider. The broken lines 15 indicate the boundaries for the individual sliders, which are subsequently cut using a diamond wheel. After cutting, the individual sliders are debonded from transfer tool 20 using a suitable solvent.

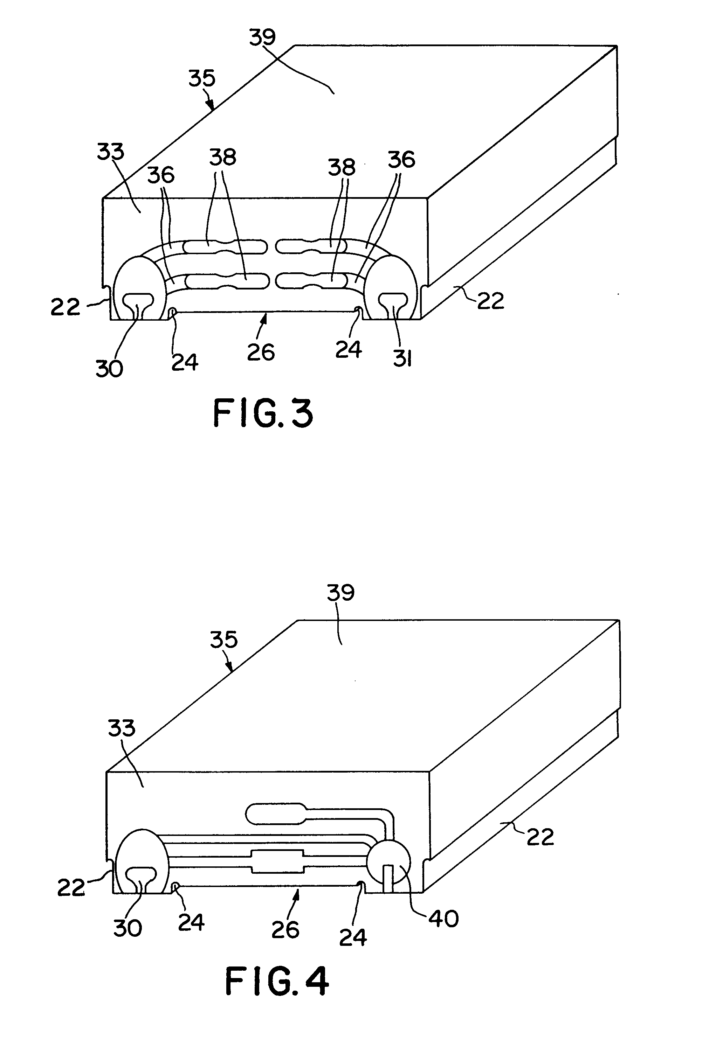

Figure 3 illustrates a first embodiment of the finished slider having a pair of thin film transducers. As seen in this Fig., transducers 30, 31 are formed on the trailing end surface 33 of the finished slider 35. Conductive leads 36 extend from the transducers 30, 31 to the enlarged and exposed contact pad regions 38. The finished slider 35 is destined to be attached to the free end of a suitable flexure member, usually by attaching the flexure member to the top surface 39.

Fig. 4 illustrates an alternate embodiment of the invention in which the right most transducer is replaced by a thin film transformer 40 used to boost the amplitude of the voltage signal produced by the thin film transducer 30. The structure and function of the thin film transformer 40 is more fully set forth in the above-referenced U.S. Patent No. 5,072,324, and also in our co-pending commonly assigned U.S. Patent Application Serial No. 07/781,713, filed October 22, 1991, entitled "Thin Film Transducer with Coil Guard Segment", the disclosure of which is hereby incorporated by reference.

As will now be apparent, the invention provides an improved slider for use in conjunction with miniature thin film transducers and thin film transformers. In particular, the slider material exhibits superior thermal expansion and conduction properties to the ALTIC material commonly employed as the slider body material. As a consequence, one process step can be completely eliminated from the device fabrication technique, and the amount of bending or twisting due to thermal stressing is substantially less than that experienced with prior art devices. As a consequence, the positive, negative and compound curvature exhibited in separated row bars during the fabrication process is substantially reduced, resulting in a higher yield of individual magnetic slider devices after the pole lapping step.

While the above provides a full and complete description of the preferred embodiments in the invention, various modifications, alternate constructions and equivalents will occur to those skilled in the art. For example, although the invention has been disclosed with the transducer 30 on the left lobe and the transformer 40 on the right lobe of the alternate embodiment, the locations of these devices can be reversed. In addition, other geometrical rail and slot configurations are envisioned. Therefore, the above should not be construed as limiting the invention, which is defined by the appended claims.

## Claims

1. A magnetic slider for use in a disk drive apparatus, said slider comprising:
a unitary body member consisting essentially of A1₂0₃, said body member having an air bearing surface, a leading end, and a trailing end; and
at least one thin film transducer formed at the trailing end of said unitary body member and having a pole tip region terminating at the air bearing surface.

2. The invention of claim 1 wherein said body member has a pair of rails extending between said leading end and said trailing end.

3. The invention of claim 2 further including a pair of thin film transducers each formed at the trailing end of a different one of said rails.

4. The invention of claim 2 further including a thin film transducer formed at the trailing end of one of said rails, and a thin film transformer formed at the trailing end of the other one of said rails.

5. A magnetic slider comprising a body member formed from an electrically non-conductive material, and at least one transducer formed on a surface of the slider.

6. A magnetic slider according to claim 5 in which said electrically non-conductive material is A1₂0₃.

7. A method of forming a magnetic slider comprising forming a wafer member from an electrically non-conductive material; forming transducer members on the wafer; and cutting the wafer member to form a plurality of sliders.

8. A method according to claim 7 in which the electrically non-conductive material is AI2 03.
